(19) Europäisches Patentamt
European Patent Office
Office européen des brevets

(11) **EP 3 558 768 B1**

(12) **EUROPÄISCHE PATENTSCHRIFT**

(45) Veröffentlichungstag und Bekanntmachung des Hinweises auf die Patenterteilung:
**13.09.2023   Patentblatt 2023/37**

(21) Anmeldenummer: **17832484.4**

(22) Anmeldetag: **12.12.2017**

(51) Internationale Patentklassifikation (IPC):
***B60T 8/17*** *(2006.01)*

(52) Gemeinsame Patentklassifikation (CPC):
**B60T 8/1705**

(86) Internationale Anmeldenummer:
**PCT/EP2017/082385**

(87) Internationale Veröffentlichungsnummer:
**WO 2018/114473 (28.06.2018 Gazette 2018/26)**

(54) **VERFAHREN ZUR ADHÄSIONSVERBESSERUNG EINES SCHIENENFAHRZEUGS DURCH KONDITIONIERUNG AUSGEWÄHLTER ACHSE(N)**

METHOD FOR IMPROVING THE ADHESION OF A RAIL VEHICLE BY CONDITIONING SELECTED AXLE(S)

PROCÉDÉ PERMETTANT D'AMÉLIORER L'ADHÉRENCE D'UN VÉHICULE FERROVIAIRE PAR CONDITIONNEMENT D'UN OU PLUSIEURS ESSIEUX SÉLECTIONNÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2016   DE 102016125194**

(43) Veröffentlichungstag der Anmeldung:
**30.10.2019   Patentblatt 2019/44**

(73) Patentinhaber: **KNORR-BREMSE Systeme für Schienenfahrzeuge GmbH 80809 München (DE)**

(72) Erfinder:
- **RASEL, Thomas**
  **85635 Höhenkirchen-Siegertsbrunn (DE)**
- **FRIESEN, Ulf**
  **85579 Neubiberg (DE)**
- **HERDEN, Marc-Oliver**
  **81377 München (DE)**
- **WACH, Jörg-Johannes**
  **81247 München (DE)**
- **MAYER, Reinhold**
  **85757 Karlsfeld (DE)**

(56) Entgegenhaltungen:
WO-A2-2013/034691       DE-A1-102006 057 813
DE-A1-102014 102 881       DE-A1-102014 204 814

1    EP 3 558 768 B1    2

**Beschreibung**

Um ein Schienenfahrzeug zu beschleunigen oder abzubremsen, müssen Beschleunigungs- (Zug-) oder Bremskräfte am Kontaktpunkt zwischen Rad und Schiene übertragen werden. Die maximale Kraft, die an diesem Kontaktpunkt zwischen Rad und Schiene übertragbar ist, hängt im Wesentlichen von den Reibungsverhältnissen zwischen Rad und Schiene ab. Auf einer trockenen Schiene sind größere Kräfte übertragbar als auf einer nassen oder schmierigen Schiene. Falls beim Bremsen eines Schienenfahrzeugs eine größere Bremskraft angefordert wird, als auf Grund der Reibungsverhältnisse zwischen Rad und Schiene übertragbar ist, kann wenigstens eines der Räder blockieren und über die Schiene rutschen. Dieser Zustand wird als Gleiten bezeichnet. Falls im Gegensatz dazu beim Beschleunigen eines Schienenfahrzeugs eine größere Beschleunigung (Zugkraft) angefordert wird, als auf Grund der Reibungsverhältnisse zwischen Rad und Schiene übertragbar ist, kann wenigstens eines der Räder durchdrehen. Dieser Zustand wird als Schleudern bezeichnet. Anders ausgedrückt beschreibt Schleudern einen Zustand, bei dem die Radumfangsgeschwindigkeit größer ist als die Fahrgeschwindigkeit. Analog dazu beschreibt Gleiten einen Zustand, bei dem die Radumfangsgeschwindigkeit kleiner ist als die Fahrgeschwindigkeit. Falls Radumfangsgeschwindigkeit und Fahrgeschwindigkeit identisch sind, wird dieser Zustand als Rollen bezeichnet.

Allgemein betrachtet wird das Auftreten einer Relativbewegung zwischen Radumfang und Schiene als Schlupf bezeichnet. Wenn also Radumfangsgeschwindigkeit und Fahrgeschwindigkeit nicht identisch sind, liegt folglich Schlupf vor. Schlupf ist des Weiteren notwendig, um überhaupt Zug- oder Bremskräfte zwischen Schiene und Rad übertragen zu können. Wenn an einem Rad ein Schlupf von null vorliegt, bedeutet dies, dass dieses Rad frei rollt, also keine Drehmomente am Rad wirken. Ohne Schlupf ist folglich keine Leistungsübertragung, also keine Übertragung von Zug- oder Bremskräfte zwischen Rad und Schiene möglich. Bei einem sehr großen Schlupf, beispielsweise beim Gleiten oder Schleudern, können gegebenenfalls keine großen Kräfte zwischen Rad und Schiene übertragen werden. Folglich liegt der optimale Schlupf zum Übertragen von maximalen Zug- oder Bremskräften zwischen null (Zustand des Rollens) und einem sehr großen Wert, wie beispielsweise 100 Prozent (Zustand des Gleitens oder Schleuderns).

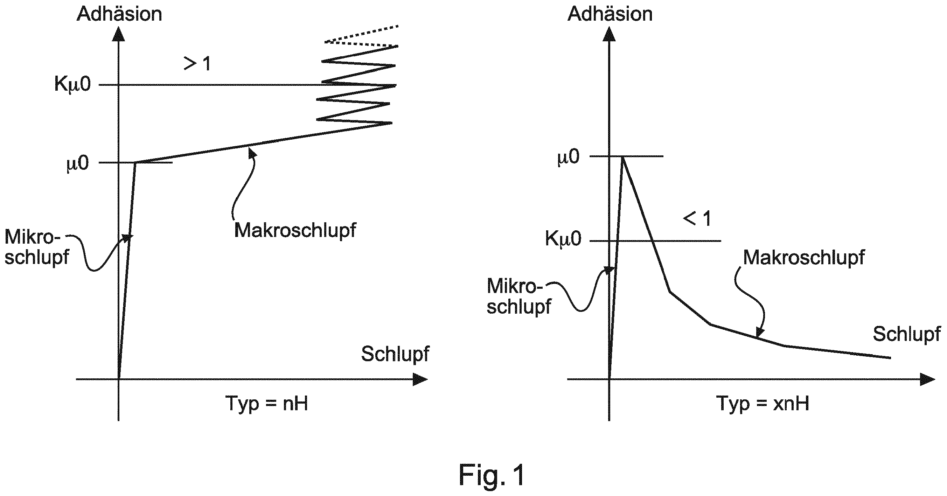

Der optimale Schlupf ist von den Reibungsverhältnissen bzw. von dem Reibungszustand zwischen Rad und Schiene abhängig. Der optimale Schlupf bei nasser Schiene kann demnach ein anderer als bei trockener Schiene sein. Unterschiedliche Reibungsverhältnisse zwischen Rad und Schiene werden nachfolgend als Kraftschlusstypen bezeichnet. Verschiedene Kraftschlusstypen werden exemplarisch in **Fig. 1** veranschaulicht.

Fig. 1 zeigt zwei Diagramme (Kraftschluss bzw. Adhäsion über Schlupf) mit verschiedenen Kraftschlusstypen. Das Diagramm auf der linken Seite zeigt einen Kraftschlusstyp, der in Fachkreisen als nH (niedriger Haftwert) bekannt ist, wobei der auf der rechten Seite gezeigte Kraftschlusstyp als xnH (extrem niedriger Haftwert) bekannt ist. Auf der (horizontalen) x-Achse der Diagramme ist jeweils der Schlupf aufgetragen, während die (vertikale) y-Achse die Adhäsion bzw. die dazu proportionale zwischen Rad und Schiene maximal übertragbare Reibkraft bzw. deren Reibbeiwert zeigt. In den Diagrammen ist des Weiteren ein Wert $\mu 0$ eingezeichnet, der in dem Übergangspunkt von Mikroschlupf zu Makroschlupf liegt. Der Teil des Graphen auf der linken Seite von $\mu 0$ zeigt jeweils den Bereich des Mikroschlupfs, und der Teil des Graphen auf der rechten Seite von $\mu 0$ zeigt jeweils den Bereich des Makroschlupfs. Des Weiteren wird $\mu 0$ grundsätzlich durch den maximalen Reibwert im Bereich des Mikroschlupfes (linker Teil des Graphen) definiert.

Bei dem links gezeigten Kraftschlusstyp nH sind maximale Kräfte im Bereich des Makroschlupfes übertragbar, wobei bei dem rechts gezeigten Kraftschlusstyp xnH die maximalen Kräfte im Bereich von $\mu 0$ übertragbar sind. Falls beispielsweise eine nH-Kraftschlussbedingung vorliegt (linkes Diagramm in Fig.1), kann ausgehend von $\mu 0$ zusätzliche Bremskraft aufgebracht werden, die im Makroschlupfbereich umgesetzt wird, da der Graph ausgehend von $\mu 0$ weiterhin ansteigt. Dieses Verhalten wird auch als "Self-Improvement" bezeichnet. Falls im Gegensatz dazu xnH-Kraftschlussbedingungen vorliegen, dann kann in einem Bereich zwischen 0 und $\mu 0$ die Bremskraft nur bis zu einem maximal festzulegenden Anteil von $\mu 0$ erhöht werden, um einen Übergang in den Makroschlupfbereich zu verhindern (denn hier fällt der Graph ausgehend von $\mu 0$ wieder ab, es liegt kein "Self-Improvement" vor). Dieser maximal festzulegende Anteil von $\mu 0$ ist in den Diagrammen als $K\mu 0$ eingezeichnet und bezieht sich auf $\mu 0$. Der Wert $K\mu 0$ stellt folglich einen Faktor dar, der auf $\mu 0$ referenziert und einen prozentualen Anteil von $\mu 0$ angibt, welcher zur Kraftübertragung nutzbar ist, ohne bei einem Kraftschlusstyp xnH einen Übergang in den Makroschlupfbereich fürchten zu müssen. Für den Kraftschlusstyp nH (linkes Diagramm in Fig.1) ergibt sich ein $K\mu 0>1$, wohingegen sich für den Kraftschlusstyp xnH (rechtes Diagramm in Fig.1) ein $Kp0<1$ ergibt. Falls beispielsweise bei einem Kraftschlusstyp xnH 80 % (=0,8) von $\mu 0$ beim Bremsen nutzbar sein soll, um 20 % "Sicherheitsabstand" zum Makroschlupfbereich zu gewährleisten, ergibt sich ein $K\mu 0$ von 0,8.

Im Stand der Technik sind Verfahren und Vorrichtungen bekannt, die mittels einer Gleitschutzregelung den Bremsvorgang eines Schienenfahrzeugs regeln. Aus der Veröffentlichung "UIC Merkblatt 541-05, Bremse - Vorschriften für den Bau der verschiedenen Bremsteile - Gleitschutzanlage" des Internationales Eisenbahnverbands (UIC), ISBN 2-7461-0968-9, ist eine Gleitschutzregelung gemäß des Standes der Technik

2

bekannt. Eine Gleitschutzregelung gemäß des Standes der Technik bestimmt aus der Raddrehzahl einen Schlupfwert, mittels welchem maximale Reibkräfte zwischen Rad und Schiene übertragbar sind, die das Schienenfahrzeug abbremsen. Bei feuchten Schienen kann ein solcher Schlupfwert bei 20 % liegen. In einem solchen Szenario würde die Gleitschutzregelung bei einer Vollbremsung einen Schlupf von 20 % an jedem der gebremsten Räder vorgeben. Der Schlupf von 20 % entspricht hierbei der Stellgröße, nach welcher die Zuspannkräfte der Bremsen geregelt werden, um den vorgegebenen Schlupfwert einzuhalten. Als Zuspannkraft wird hierbei die Kraft von dem Bremssysten auf das einzelne Rad bezeichnet, also beispielsweise die Kraft eines Bremszylinders auf ein Rad. Falls also bei einer Vollbremsung als Stellgröße ein Schlupf von 20 % vorgegeben ist, an einer Achse aktuell aber nur 15 % Schlupf vorliegen, wird die Zuspannkraft (Regelgröße) der Bremsvorrichtung an dieser Achse erhöht, um stärker zu bremsen und dadurch den vorgegebenen Schlupfzustand zu erreichen. Dadurch wird der Schlupf von 15 % auf 20 % erhöht, und die zwischen der Schiene und den gebremsten Rädern übertragene Reibkraft (Gesamtbremskraft bzw. Summenbremskraft) erhöht.

Die WO 2013/034691 A2 offenbart zudem eine Bremssteuereinrichtung für Schienenfahrzeuge mit einer Reibungsbremseinrichtung, wobei die Bremssteuereinrichtung dazu ausgelegt ist, einen tatsächlichen Adhäsionsbeiwert zwischen einem Rad des Schienenfahrzeugs und einer mit dem Rad in Kontakt stehenden Schiene zu ermitteln. Ferner ist die Bremssteuereinrichtung dazu ausgelegt, einen Bremssollwert basierend auf dem tatsächlichen Adhäsionsbeiwert zu berechnen und die Reibungsbremseinrichtung zum Bremsen mindestens eines durch die Reibungsbremseinrichtung zu bremsenden Rades basierend auf dem Bremssollwert anzusteuern.

Der vorliegenden Erfindung liegt die Aufgabe zu Grunde, ein Verfahren zur Adhäsionsverbesserung eines Schienenfahrzeugs durch Konditionierung ausgewählter Achse(n) anzubieten, um ein Schienenfahrzeug mit einer geforderten Verzögerung abzubremsen.

Die Erfindung wird durch den Gegenstand der unabhängigen Ansprüche 1 und 5 definiert.

Vorteilhafte Weiterbildungen sind Gegenstand der Unteransprüche.

Im Nachfolgenden wird der Begriff der Einheiten verwendet. Unter einer Einheit kann/können ein Rad, eine Achse, mehrere Achsen, ein Drehgestell, ein Wagen, oder mehrere Wägen zusammengefasst sein. Die Bremskraft kann jeweils für eine Einheit geregelt werden. Des Weiteren kann der Schlupf für jeweils eine Einheit überwacht werden.

Maßgeblich für das Bremsvermögen eines Schienenfahrzeugs ist die Summenbremskraft. Die Summenbremskraft wird aus der Summe der Bremskräfte (Reibkräfte zwischen Rad und Schiene) aller Einheiten gebildet.

Erfindungsgemäß werden gemäß eines Ausführungsbeispiels die Adhäsionsverhältnisse aller Einheiten überwacht, und es wird ermittelt, ob eine Veränderung des Schlupfes an einer Einheit zu einer Verbesserung der Reibungsverhältnisse an den darauffolgenden Einheiten führt, wodurch an den darauffolgenden Einheiten größere Bremskräfte (Reibkräfte zwischen Rad und Schiene) übertragbar sind, durch welche eine erhöhte Gesamtbremskraft realisierbar ist.

Erfindungsgemäß wird gemäß eines Ausführungsbeispiels der Radschlupf (Stellgröße) einer (bezüglich der Fahrtrichtung eines Schienenfahrzeugs) vorderen Einheit erhöht (alternativ hierzu vermindert), durch Regelung der Zuspannkraft an dieser vorderen Einheit. Auf Grund der Veränderung des Schlupfes an der vorderen Einheit ändern sich die Reibungsverhältnisse am Rad-Schiene-Kontakt der darauffolgenden Einheiten. Aufgrund dessen erhöhen sich die Werte $\mu 0$ und folglich auch $K\mu 0$ für die darauffolgenden Einheiten. Folglich kann die Bremskraft durch die Gleitschutzregelung durch ein Anheben der Zuspannkräfte an den darauffolgenden Einheiten erhöht werden, bei gleichbleibendem Radschlupf, bzw. um den Radschlupf auf dem vorherigen Wert zu halten oder ihn wieder dorthin zu regeln, was zu einer verbesserten Summenbremskraft des Gesamtfahrzeugs führt. Hierdurch kann insbesondere eine verbesserte Summenbremskraft des Gesamtfahrzeugs erreicht werden, obwohl die Bremskraft (Reibkraft zwischen Rad und Schiene) an der vorderen Einheit, durch Erhöhen des Schlupfes, abfällt.

Um den Erfindungsgedanken rein beispielhaft zu verdeutlichen, wird obiges Beispiel mit einem Schlupf von 20 % als Regelgröße herangezogen. Es liegt ein Szenario vor, bei dem maximale Reibungskräfte zwischen Rad und Schiene bei 20 % Schlupf übertragbar sind. Erfindungsgemäß würde der Radschlupf (Stellgröße) nun an beispielsweise der vordersten Achse (Einheit) auf beispielsweise 40 % erhöht werden, durch ein Erhöhen der Zuspannkraft (Regelgröße) der Bremse an dieser Achse. Hierdurch verschlechtert sich die Bremskraft, also die Reibkraft zwischen Rad und Schiene an dieser vordersten Achse. Allerdings werden die Reibungsverhältnisse der darauffolgenden Achsen dahingehend verändert, dass an diesen bei einem unveränderten Schlupf von 20 % nun größere Reibkräfte zwischen Rad und Schiene übertragbar sind. Die Zuspannkraft (Regelgröße) wird an diesen Einheiten folglich erhöht, bei einer unveränderten Stellgröße von 20 % Schlupf an diesen Einheiten. Die Gesamtbremskraft (Reibkraft zwischen allen gebremsten Rädern und der Schiene) des Schienenfahrzeugs wird hierdurch erhöht, obwohl die Bremskraft an der ersten Einheit verschlechtert wurde. Dieser Effekt ist beispielsweise dadurch zu erklären, dass an der ersten Einheit durch den veränderten Schlupf Feuchtigkeit und Schmutz besser von der Schiene abgeführt werden, wodurch die Reibungsverhältnisse der darauffolgenden Einheiten verbessert werden.

Es ist darüber hinaus außerdem ein Szenario denkbar, in welchem die Reibkraft an einer der vorderen Einheiten durch eine Veränderung des Schlupfes ansteigt, und die Reibungskräfte an den darauffolgenden Einheiten ebenfalls ansteigen.

Erfindungsgemäß werden gemäß eines Ausführungsbeispiels die Adhäsionsverhältnisse aller Einheiten überwacht, und es wird ermittelt, ob der Einsatz von lokalen Maßnahmen an einer Einheit zu einer Verbesserung der Reibungsverhältnisse an den verbleibenden Einheiten führt, wodurch an den verbleibenden Einheiten größere Bremskräfte übertragbar sind, durch welche eine erhöhte Gesamtbremskraft realisierbar ist. Diese lokalen Maßnahmen, welche für ein Anheben der zugweiten Adhäsionsverhältnisse bzw. für ein Verbessern der zugweiten Reibungsverhältnisse zwischen Rad und Schiene vorgesehen sind, können unter Umständen die Reibungsverhältnisse zwischen Rad und Schiene an einer einzelnen Einheit verschlechtern, und trotzdem die zugweiten Adhäsionsverhältnisse verbessern. Erfindungsgemäß werden als lokale Maßnahmen u.a. vorgesehen: maximierter Schlupfeintrag, Sandung, Sandung in Kombination mit maximiertem Schlupfeintrag, Mg-Schienenbremse, Mg-Schienenbremse in Kombination mit maximiertem Schlupfeintrag, Mg-Schienenbremse in Kombination mit Sandung.

In Fahrtrichtung des Schienenfahrzeugs gesehen können solche Einheiten, die hinter einer (vorderen) Einheit fahren, an welcher eine adhäsionsverbessernde Maßnahme (d.h. Veränderung des Schlupfes und/oder wenigstens eine der oben genannten lokalen Maßnahmen) ausgeführt wird, eine erhöhte Bremskraft übertragen. Die zu erwartende zugweite Adhäsionsanhebung einerseits und der hierfür gegebenenfalls hinzunehmende lokale Bremskraftverlust werden erfindungsgemäß beim Einsatz der lokalen Maßnahmen zugweit berücksichtigt und gesteuert.

Vorteilhafterweise wird die erste Einheit des Schienenfahrzeugs wie oben beschrieben geregelt (d.h. Veränderung des Schlupfes und/oder wenigstens eine der oben genannten lokalen Maßnahmen), um die vorteilhaften Reibungsverhältnisse am Rad-Schiene-Kontakt an möglichst vielen daraufffolgenden Einheiten nutzbar zu machen.

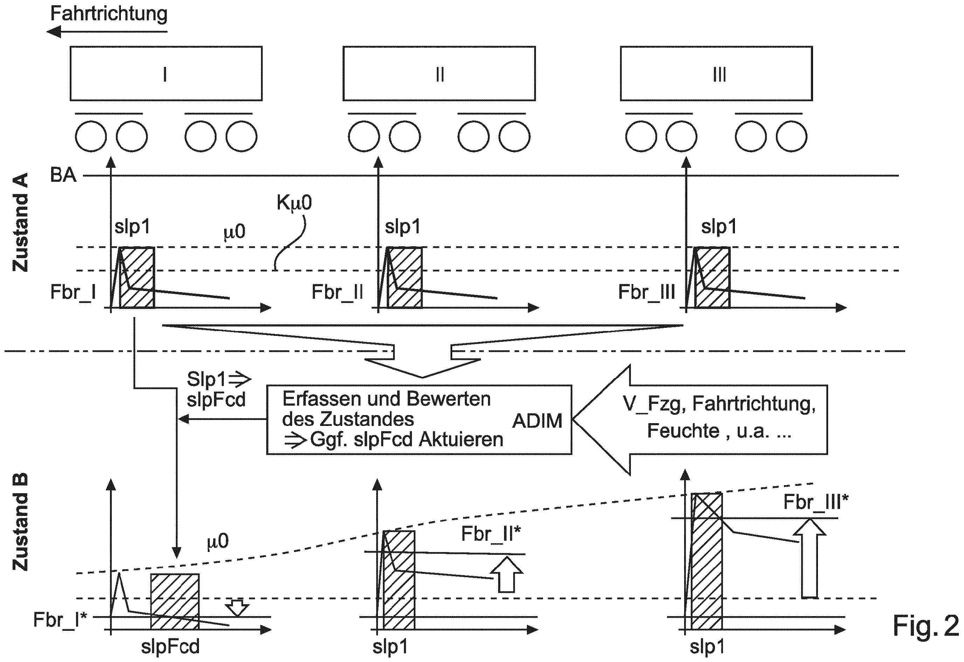

**Fig. 2** zeigt im oberen Bereich ein Schienenfahrzeug mit drei Wägen, nämlich einem Wagen ganz links, einem Wagen in der Mitte, sowie einem Wagen ganz rechts, in einer schematischen Seitenansicht. In diesem Ausführungsbeispiel wird eine Fahrtrichtung des Schienenfahrzeugs nach links angenommen. In diesem Ausführungsbeispiel entspricht jeweils ein Wagen einer Einheit. Folglich entspricht der linke Wagen einer Einheit I, der mittlere Wagen einer Einheit II, und der rechte Wagen einer Einheit III. Unter den Wägen bzw. den Einheiten I, II, III ist für jede Einheit I, II, III ein Diagramm Kraftschluss über Schlupf dargestellt. Es handelt sich dabei um Diagramme des Kraftschlusstyps xnH, analog zu Fig. 1. Im nachfolgenden werden die Diagramme des Zustandes A (Bereich über der gestrichpunkteten Linie) beschreiben.

Für jede der Einheiten I, II, III wird im Zustand A eine aktuelle Bremskraft (Reibkraft zwischen Rad und Schiene) Fbr_I, Fbr_II, Fbr_III dargestellt, welche jeweils auf dem Wert $K\mu0$ liegt. Diese Reib- bzw. Bremskräfte werden dadurch erreicht, dass ein Radschlupf slp1 als Stellgröße an allen Einheiten I, II, III vorgegeben ist, und die Zuspannkräfte an allen Einheiten I, II, III als Regelgröße nach der Stellgröße geregelt werden. Folglich wird an jeder der Einheiten I, II, III die maximal verfügbare Bremskraft $K\mu0$ abgerufen. Ein Erhöhen der Bremskräfte Fbr_I, Fbr_II, Fbr_III durch ein Verändern des Schlupfes an den Einheiten I, II, III ist folglich an keiner der Einheiten I, II, III möglich, siehe hierzu auch die Erläuterungen zu Fig. 1.

Wenn beim Ausführen eines der erfindungsgemäßen Verfahren erkannt wird, dass durch ein Verändern der Stellgröße Schlupf an Einheit I von slp1 auf einen forcierten Radschlupf slpFcd eine höhere Summenbremskraft F_Sum_B erreichbar ist, findet der Übergang zu Zustand B statt.

Im nachfolgenden werden die Diagramme des Zustandes B (Bereich unter der gestrichpunkteten Linie) beschrieben.

Im Zustand B wurde der Schlupf an Einheit I von dem bisherigen Schlupf slp1 auf den (größeren) forcierten Radschlupf slpFcd geregelt. Die Zuspannkraft (Regelgröße) an Einheit I steigt durch diesen Regelungseingriff. Die Bremskraft Fbr_I* in Zustand B ist dabei geringer als die Bremskraft Fbr_I in Zustand A. Durch das Bremsen der vorausfahrenden Einheit I in dem forcierten Makroschlupfbereich slpFcd werden die Gleise so konditioniert, dass die Werte $\mu0$ und folglich auch $K\mu0$ für die hinterherfahrenden Einheiten II und III ansteigen, und somit der Schlupf an diesen Einheiten bis zu einem Eingreifen des Reglers absinkt (=Zustand im Übergang von Zustand A zu Zustand B, nicht dargestellt). Die Stellgröße Radschlupf bleibt an den Einheiten II und III allerdings unverändert bei slp1. Folglich wird die Regelgröße Zuspannkraft durch die Regelung angehoben, um den Radschlupf an den Einheiten II und III wieder auf die Stellgröße zu regeln (=Zustand B). Im Zustand B ist folglich an Einheit II eine optimierte Bremskraft Fbr_II*, und an Einheit III eine optimierte Bremskraft Fbr_III* übertragbar.

Die Summenbremskraft aller Einheiten I, II, III im Zustand A beträgt:

$$F\_Sum\_A = Fbr\_I + Fbr\_II + Fbr\_III$$

Die Summenbremskraft aller Einheiten I, II, III im Zustand B beträgt:

$$F\_Sum\_B = Fbr\_I* + Fbr\_II* + Fbr\_III*$$

Des Weiteren gilt: F_Sum_B > F_Sum_A

Für Zustand A ist außerdem die geforderte Gesamtbremskraft (Bremsanforderung BA) eingezeichnet. Diese liegt über der Summenbremskraft F_Sum_A.

In Zustand B kann durch die nun erhöhte Summenbremskraft F_Sum_B ein größerer Anteil der Bremsanforderung BA umgesetzt werden.

Die erfindungsgemäßen Verfahren werden in Fig. 2 als ADIM bezeichnet, diese Bezeichnung steht für "Adhesion Improver". Beim Ausführen der Verfahren werden in diesem Ausführungsbeispiel äußere Einflussfaktoren, wie beispielsweise die Position und die Masse des Schienenfahrzeugs, die Witterung, die Feuchte, die Temperatur, die Geschwindigkeit oder die Fahrtrichtung des Schienenfahrzeugs berücksichtigt. Dies ist allerdings keine zwingende Voraussetzung. In einem weiteren, nicht gezeigten Ausführungsbeispiel werden diese Faktoren nicht berücksichtigt.

BEZUGSZEICHENLISTE

| | |
|---|---|
| nH | Kraftschlusstyp "niedriger Haftwert" |
| xnH | Kraftschlusstyp "extrem niedriger Haftwert" |
| $\mu 0$ | Übergangspunkt von Mikro- nach Makroschlupf |
| $K\mu 0$ | maximal verfügbare Bremskraft |
| A | Zustand vor Anwendung eines erfindungsgemäßen Verfahrens |
| B | Zustand nach Anwendung eines erfindungsgemäßen Verfahrens |
| I, II, III | Einheiten |
| ADIM | Adhesion Improver |
| Mg | Magnetschienenbremse |
| Fbr_I | (aktuelle/bisherige) Bremskraft an Einheit I (in Zustand A) |
| Fbr_II | (aktuelle/bisherige) Bremskraft an Einheit II (in Zustand A) |
| Fbr_III | (aktuelle/bisherige) Bremskraft an Einheit III (in Zustand A) |
| F_Sum_A | (aktuelle) Summenbremskraft aller Einheiten I, II, III in Zustand A |
| Fbr_I* | (optimierte) Bremskraft an Einheit I (in Zustand B) |
| Fbr_II* | (optimierte) Bremskraft an Einheit II (in Zustand B) |
| Fbr_III* | (optimierte) Bremskraft an Einheit III (in Zustand B) |
| F_Sum_B | (erhöhte) Summenbremskraft aller Einheiten I, II, III in Zustand B |
| slp1 | (aktueller/bisheriger) Radschlupf / Ausgangsradschlupf |
| slpFcd | forcierte Radschlupf |

**Patentansprüche**

1.  Regelungsverfahren zur Adhäsionsverbesserung eines Schienenfahrzeugs durch Konditionierung ausgewählter Achse(n), aufweisend die Schritte:

    - Erkennen, ob durch ein Verändern der Stellgröße Radschlupf an wenigstens einer Einheit (I) von einem aktuellen Ausgangsradschlupf (slp1) auf einen forcierten Radschlupf (slpFcd) eine höhere Summenbremskraft (F_Sum_B) erreichbar ist (Zustand A),

    Falls dies zutrifft:

    - Verändern des Radschlupfes an wenigstens einer Einheit (I) von dem aktuellen Ausgangsradschlupf (slp1) auf den forcierten Radschlupf (slpFcd), durch Regeln der Regelgröße Zuspannkraft an dieser Einheit (I), wodurch sich die Reibungsverhältnisse zwischen Rad und Schiene an darauffolgenden Einheiten (II, III) ändern,
    - Regeln der Regelgröße Zuspannkraft an den darauffolgenden Einheiten (II, III), um den Radschlupf an diesen Einheiten (II, III), der sich durch die geänderten Reibungsverhältnisse ebenfalls geändert hat, wieder auf die unveränderte Stellgröße Ausgangsradschlupf (slp1) zu regeln, wobei sich an den Einheiten (I, II, III) optimierten Bremskräfte (Fbr_I*, Fbr_II*, Fbr_III*) ergeben, wobei
    - die Summe (F_Sum_B) der optimierten Bremskräfte (Fbr_I*, Fbr_II*, Fbr_III*) an den Einheiten (I, II, III) nach den vorhergehenden Verfahrensschritten (Zustand B) größer ist als die Summe (F_Sum_A) der vorhergehenden Bremskräfte (Fbr_I, Fbr_II, Fbr_III).

2.  Regelungsverfahren gemäß dem vorhergehenden Anspruch, wobei der forcierten Radschlupf (slpFcd) der wenigstens einen Einheit (I) größer als der Ausgangsradschlupf (slp1) gewählt wird, wodurch die Regelgröße Zuspannkraft an dieser Einheit (I) erhöht wird, wodurch die optimierte Bremskraft (Fbr_I*) an dieser Einheit (I) kleiner wird als die vorherige Bremskraft (Fbr_I) der wenigstens einen Einheit (I).

3.  Regelungsverfahren gemäß Anspruch 1, wobei der forcierten Radschlupf (slpFcd) der wenigstens einen Einheit (I) kleiner als der Ausgangsradschlupf (slp1) gewählt wird, wodurch die Regelgröße Zuspannkraft an dieser Einheit (I) verringert wird, wodurch die optimierte Bremskraft (Fbr_I*) an dieser Einheit (I) größer wird als die vorherige Bremskraft (Fbr_I) der wenigstens einen Einheit (I).

**4.** Regelungsverfahren gemäß einem der vorhergehenden Ansprüche, wobei
die wenigstens eine Einheit (I) in Fahrtrichtung des Schienenfahrzeugs gesehen bezüglich aller Einheiten (I, II, III) nicht die hinterste Einheit (III), sondern bevorzugt eine der vorderen oder die vorderste Einheit (I) ist.

**5.** Regelungsverfahren zur Adhäsionsverbesserung eines Schienenfahrzeugs durch Konditionierung ausgewählter Achse(n), aufweisend die Schritte:

- Erkennen, ob durch eine adhäsionsverbessernde Maßnahme an wenigstens einer Einheit (I) eine höhere Summenbremskraft (F_Sum_B) erreichbar ist, wobei

die adhäsionsverbessernde Maßnahme aufweist:

- Sanden der Schienen, oder
- Einsatz von Mg-Schienenbremse, oder
- Einsatz von Mg-Schienenbremse und Sanden der Schienen;

Falls dies zutrifft:

- Ausführen der adhäsionsverbessernden Maßnahme an wenigstens dieser Einheit (I);
- Regeln der Regelgröße Zuspannkraft an den darauffolgenden Einheiten (II, III), um den Radschlupf an diesen Einheiten (II, III), der sich durch die adhäsionsverbessernden Maßnahme geändert hat, auf einen zum Abbremsen optimierten Radschlupf (slp1) zu regeln, wobei sich an den Einheiten (I, II, III) optimierten Bremskräfte (Fbr_I*, Fbr_II*, Fbr_III*) ergeben, wobei
- die Summe (F_Sum_B) der optimierten Bremskräfte (Fbr_I*, Fbr_II*, Fbr_III*) an den Einheiten (I, II, III) nach den vorhergehenden Verfahrensschritten (Zustand B) größer ist als die Summe (F_Sum_A) der vorhergehenden Bremskräfte (Fbr_I, Fbr_II, Fbr_III).

**6.** Regelungsverfahren gemäß dem vorhergehenden Anspruch, wobei
die optimierte Bremskraft (Fbr_I*) an der Einheit (I), an welcher die adhäsionsverbessernden Maßnahme ausgeführt wurde, geringer ist als die vorherige Bremskraft (Fbr_I).

**7.** Regelungsverfahren gemäß dem vorhergehenden Anspruch, wobei
die wenigstens eine Einheit (I) in Fahrtrichtung des Schienenfahrzeugs gesehen bezüglich aller Einheiten (I, II, III) nicht die hinterste Einheit (III), sondern bevorzugt eine der vorderen oder die vorderste Einheit (I) ist.

**8.** Regelungsverfahren, das eines der Verfahren gemäß einem der Ansprüche 1 bis 4 mit einem Verfahren gemäß einem der Ansprüche 5 bis 7 kombiniert.

**Claims**

**1.** Regulating method for improving the adhesion of a rail vehicle by way of conditioning of a selected axle/selected axles, comprising the steps:

- detecting of whether a higher total brake force (F_Sum_B) can be achieved by way of a change of the wheel slip actuating variable at at least one unit (I) from a current starting wheel slip (slpl) to a forced wheel slip (slpFcd) (state A),

if this is the case:

- changing of the wheel slip at at least one unit (I) from the current starting wheel slip (slp1) to the forced wheel slip (slpFcd), by way of regulating the brake application force control variable at said unit (I), as a result of which the friction characteristics between the wheel and the rail change at following units (II, III),
- regulating of the brake application force control variable at the following units (II, III), in order to regulate the wheel slip at said units (II, III), which has likewise changed as a result of the changed friction characteristics, to the unchanged starting wheel slip actuating variable (slpl) again, brake forces (Fbr_I*, Fbr_II*, Fbr_III*) which are optimised resulting at the units (I, II, III),
- the sum (F_Sum_B) of the optimised brake forces (Fbr_I*, Fbr_II*, Fbr_III*) at the units (I, II, III) after the preceding method steps (state B) being greater than the sum (F_Sum_A) of the preceding brake forces (Fbr_I, Fbr_II, Fbr_III).

**2.** Regulating method according to the preceding claim, wherein
the forced wheel slip (slpFcd) of the at least one unit (I) is selected to be greater than the starting wheel slip (slp1), as a result of which the brake application force control variable is increased at said unit (I), as a result of which the optimised brake force (Fbr_I*) at said unit (I) becomes smaller than the preceding brake force (Fbr_I) of the at least one unit (I).

**3.** Regulating method according to claim 1, wherein
the forced wheel slip (slpFcd) of the at least one unit (I) is selected to be smaller than the starting wheel slip (slp1), as a result of which the brake application force control variable is reduced at said unit (I), as a result of which the optimised brake force (Fbr_I*) at said unit (I) becomes greater than the preceding brake force (Fbr_I) of the at least one unit (I).

**4.** Regulating method according to any of the preceding claims, wherein the at least one unit (I) is not the rearmost unit (III) with regard to all the units (I, II, III) as viewed in the driving direction of the rail vehicle, but rather preferably one of the front units or the frontmost unit (I).

**5.** Regulating method for improving the adhesion of a rail vehicle by way of conditioning of a selected axle/selected axles, comprising the steps:

- detecting of whether a higher total brake force (F_Sum_B) can be achieved by way of an adhesion-improving measure at at least one unit (I), the adhesion-improving measure comprising:

- sanding of the rails, or
- use of an electromagnetic rail brake, or

use of an electromagnetic rail and sanding of the rails;
if this is the case:

- carrying out of the adhesion-improving measure at at least said unit (I);
- regulating of the brake application force control variable at the following units (II, III), in order to regulate the wheel slip at said units (II, III), which has changed as a result of the adhesion-improving measure to a wheel slip (slp1) which is optimised for braking, optimised brake forces (Fbr_I*, Fbr_II*, Fbr_III*) resulting at the units (I, II, III),
- the sum (F_Sum_B) of the optimised brake forces (Fbr_I*, Fbr_II*, Fbr_III*) at the units (I, II, III) after the preceding method steps (state B) being greater than the sum (F_Sum_A) of the preceding brake forces (Fbr_I, Fbr_II, Fbr_III).

**6.** Regulating method according to the preceding claim, wherein the optimised brake force (Fbr_I*) at the unit (I), at which the adhesion-improving measure was carried out, is lower than the preceding brake force (Fbr_I).

**7.** Regulating method according to the preceding claim, wherein the at least one unit (I) is not the rearmost unit (III) with regard to all the units (I, II, III) as viewed in the driving direction of the rail vehicle, but rather preferably one of the front units or the frontmost unit (I).

**8.** Regulating method which combines one of the methods according to any of claims 1 to 4 with a method according to any of claims 5 to 8.

**Revendications**

**1.** Procédé de réglage de l'amélioration de l'adhérence d'un véhicule ferroviaire par mise en condition d'un ou de plusieurs essieux sélectionnés, comportant les stades :

- détection du point de savoir si, par une modification de la grandeur réglante, glissement de roue sur au moins une unité (I), on peut obtenir en passant d'un glissement (slp1) initial de roue en cours, à un glissement (slpFcd) de roue forcé, une force (F_Sum_B) de freinage somme plus grande (état A),

si cela est le cas :

- modification du glissement de roue sur au moins une unité (I) en le faisant passer du glissement (slp1) de roue initial en cours au glissement (slpFcd) de roue forcé, par réglage de la grandeur réglée, force de serrage sur cette unité (I), grâce à quoi les conditions de frottement entre la roue et le rail se modifient sur des unités (II, III) suivantes,
- réglage de la grandeur réglée, force de serrage sur les unités (II, III) suivantes, pour régler le glissement de roue sur ces unités (II, III), qui a été modifié également par la modification des conditions de frottement, à nouveau à la grandeur réglante non modifiée, glissement (slp1) initial de roue, dans lequel on obtient sur les unités (I, II, III) des forces Fbr_I*, FbrI_II*, Fbr_III*) de freinage optimisées, dans lequel
- la somme (F_Sum_B) des forces (Fbr_I*, Fbr_II*, Fbr_III*) de freinage optimisées sur les unités (I, II, III), après les stades précédents du procédé (état B), est plus grande que la somme (F_Sum_A) des forces (Fbr_I, Fbr_II, Fbr_III) précédentes de freinage.

**2.** Procédé de réglage suivant la revendication précédente, dans lequel on choisit le glissement (slpFcd) de roue forcé de la au moins une unité (I) plus grand que le glissement (slp1) de roue initial, grâce à quoi la grandeur réglée force de serrage est augmentée sur cette unité, grâce à quoi la force (Fbr_I*) optimisée est plus petite sur cette unité que la force (Fbr_I) de freinage précédente de la au moins une unité (I).

**3.** Procédé de réglage suivant la revendication 1, dans lequel

on choisit le glissement (slpFcd) de roue forcé de la au moins une unité (I) plus petit que le glissement (slp1) initial de roue, grâce à quoi la grandeur réglée force de serrage est diminuée sur cette unité (I) grâce à quoi la force (Fbr_I*) de freinage optimisée est plus grande sur cette unité que la force (Fbr_I) de freinage précédente de la au moins une unité (I).

4.  Procédé de réglage suivant l'une des revendications précédentes dans lequel
    la au moins une unité (I) n'est pas, considéré dans le sens de circulation du véhicule ferroviaire, par rapport à toutes les unités (I, II, III), l'unité (III) la plus en arrière, mais est de préférence une unité (I) en avant ou l'unité (I) la plus en avant.

5.  Procédé de réglage de l'amélioration de l'adhérence d'un véhicule ferroviaire par mise en condition d'un ou de plusieurs essieux sélectionnés, comportant les stades :

    - détection du point de savoir si par une mesure améliorant l'adhérence sur au moins une unité (I), une force (F_Sum_B) de freinage, somme plus grande peut être obtenue, dans lequel

    la mesure améliorant l'adhérence comporte :

    - un sablage des rails ou
    - l'utilisation de freins magnétiques de véhicule ferroviaire ou
    - l'utilisation de freins magnétiques de véhicule ferroviaire et sablage des rail ;

    si cela est le cas :

    - mise en œuvre de la mesure améliorant l'adhérence sur au moins cette unité (I) ;
    - réglage de la grandeur réglée force de serrage sur les unités (II, III) suivantes, pour régler le glissement de roue sur ces unités (II, III), qui a été modifié par la mesure améliorant l'adhérence à un frottement (slP1) de roue optimisé, dans lequel on obtient sur les unités (I, II, III) des forces Fbr_I*, FbrI_II*, Fbr_III*) de freinage optimisées, dans lequel
    - la somme (F_Sum_B) des forces (Fbr_I*, Fbr_II*, Fbr_III*) de freinage optimisées sur les unités (I, II, III), après les stades précédents du procédé (état B), est plus grande que la somme (F_Sum_A) des forces (Fbr_I, Fbr_II, Fbr_III) précédentes de freinage.

6.  Procédé de réglage suivant la revendication précédente, dans lequel
    la force (Fbr_I*) de freinage optimisée sur l'unité (I), sur laquelle la mesure améliorant l'adhérence a été exécutée, est plus petite que la force (Fbr_I) de freinage précédente.

7.  Procédé de réglage suivant la revendication précédente, dans lequel
    la au moins une unité (I) n'est pas, considéré dans le sens de circulation du véhicule ferroviaire, par rapport à toutes les unités (I, II, III), l'unité (III) la plus en arrière, mais est de préférence une unité (I) en avant ou l'unité (I) la plus en avant.

8.  Procédé de réglage qui combine l'un des procédés suivant l'une des revendications 1 à 4 à un procédé suivant l'une des revendications 5 à 7.

Fig. 1

EP 3 558 768 B1

Fig. 2

**IN DER BESCHREIBUNG AUFGEFÜHRTE DOKUMENTE**

**In der Beschreibung aufgeführte Patentdokumente**

- WO 2013034691 A2

**In der Beschreibung aufgeführte Nicht-Patentliteratur**

- UIC Merkblatt 541-05, Bremse - Vorschriften für den Bau der verschiedenen Bremsteile - Gleitschutzanlage. Internationales Eisenbahnverbands (UIC)